# EUROPÄISCHE PATENTSCHRIFT

(11) **EP 2 139 634 B1**
(45) Veröffentlichungstag und Bekanntmachung des Hinweises auf die Patenterteilung: **29.09.2010**
(21) Anmeldenummer: 08735051.8
(22) Anmeldetag: 07.04.2008
(51) Int. Cl.: B23D 15/04, B23D 15/12

(54) **SCHNEIDVORRICHTUNG**
CUTTING DEVICE
DISPOSITIF DE COUPE

(30) Priorität: 27.04.2007 DE 102007019963
(43) Veröffentlichungstag der Anmeldung: 06.01.2010
(73) Patentinhaber: SMS Siemag AG, 40237 Düsseldorf (DE)
(72) Erfinder: BAUR, Thomas, 57271 Hilchenbach (DE)
(74) Vertreter: Klüppel, Walter
(86) Internationale Anmeldenummer: PCT/EP2008/002730
(87) Internationale Veröffentlichungsnummer: WO 2008/135127

(56) Entgegenhaltungen:
- DE-A1- 2 911 765
- GB-A- 255 780
- US-A- 3 763 689

## Beschreibung

### Technisches Gebiet

Die Erfindung betrifft eine Schneidvorrichtung insbesondere zum Schneiden von Blechen, gemäß dem Oberbegriff von Anspruch 1. Weiterhin betrifft die Erfindung ein Verfahren zum Schneiden von Blechen nach dem Oberbegriff von Anspruch 2. Eine solche Vorrichtung and ein solches Verfahren sind aus der US 3 763 689 und der GB 255 780 bekannt.

### Stand der Technik

Schneidvorrichtungen zum Schneiden von Blechen sind im Stand der Technik bekannt. Dabei sind Schneidvorrichtungen bekannt, die Schneidblätter aufweisen, die mittels einer angetriebenen Bewegung relativ zueinander in einer Schwenkbewegung verlagerbar sind.

Die DE 2345596 A offenbart eine Schneidvorrichtung, bei welcher mittels eines ersten Schneidblatts und mittels eines zweiten Schneidblatts ein Schneidvorgang durchgeführt werden kann. Das zweite Schneidblatt ist dabei mit einer Einrichtung zum Hin- und Herbewegen versehen, so dass das zweite Schneidblatt mit seiner Schneidkante in der Schneidebene bewegbar ist. Dazu ist das Schneidblatt mittels Verbindungsgliedern und Gelenken beweglich gehalten und angetrieben.

Die DE 27 46 402 A offenbart ebenfalls eine Schneidvorrichtung, bei welcher mittels eines ersten Schneidblatts und mittels eines zweiten Schneidblatts ein Schneidvorgang durchgeführt werden kann, wobei das zweite Schneidblatt auch dabei mit einer Einrichtung zum Hin- und Herbewegen versehen ist, so dass das zweite Schneidblatt mit seiner Schneidkante in der Schneidebene bewegbar ist. Auch dazu ist das Schneidblatt mittels Verbindungsgliedern und Gelenken beweglich gehalten. Vergleichbare Vorrichtungen sind durch die DE 21 22 855 A und die DE 1 777 014 A offenbart.

Die DE 2510881 offenbart eine Schneidvorrichtung, bei welcher ein Schneidblatt über Hebel an Exzenterrollen angelenkt ist und durch die Drehung der Exzenterrollen das Schneidblatt bewegbar ist. Die DE 23 29 096 A offenbart eine vergleichbare Anlenkung eines Schneidblatts über Exzenterrollen.

Bei diesen Schneidvorrichtungen ist die Führung des Schneidblatts über die Anlenkungen mittels der Hebel und der Exzenterrollen fest vorgegeben, so dass veränderte Schnittgeometrien nicht ermöglicht werden und daher verschiedene Blechdicken auf einer Schneidvorrichtung nicht oder nicht optimal verarbeitet werden können.

### Darstellung der Erfindung, Aufgabe, Lösung, Vorteile

Aufgabe der Erfindung ist es, eine Schneidvorrichtung und ein Verfahren zu schaffen, mittels welcher eine variable Schnittgeometrie ermöglicht wird und daher Bleche mit einer variablen Blechdicke verarbeitet werden können.

Erfindungsgemäß wird die Aufgabe bezüglich der Vorrichtung mit den Merkmalen von Anspruch 1 gelöst. Die Aufgabe bezüglich des Verfahrens wird mit den Merkmalen von Anspruch 2 gelöst.

Dazu ist die Schneidvorrichtung erfindungsgemäß mit einem ersten Schneidblatt eines Obermessers und einem zweiten Schneidblatt eines Untermessers versehen, mit einer Antriebsvorrichtung mit zumindest zwei drehbar antreibbaren Exzenterwellen, welche mittels Verbindungselementen zumindest mit dem ersten Schneidblatt verbunden sind, wobei zumindest eines der Verbindungselemente in der Länge veränderlich einstellbar ausgebildet ist.

Dabei ist es erfindungsgemäß vorteilhaft, wenn beide Verbindungselemente zwischen den Exzenterwellen und dem ersten Schneidblatt in der Länge veränderlich einstellbar sind.

Erfindungsgemäß ist es weiterhin zweckmäßig, wenn das zumindest eine Verbindungselement ein Einstellelement aufweist zur Längenverstellung des Verbindungselements.

Bei einem vorteilhaften Ausführungsbeispiel ist es zweckmäßig, wenn das Einstellelement eine Gewindestange oder Gewindespindel und zumindest eine oder vorzugsweise zwei Gewindehülsen aufweist. Dabei sind die Gewindestange bzw. die Gewindespindel und die Gewindehülse relativ zueinander verdrehbar, so dass eine Längenänderung des Verbindungselements resultiert. Die Verstellung kann dabei mechanisch oder auch elektronisch gesteuert, beispielsweise mittels eines Elektromotors oder eines Druckmittelmotors erfolgen.

Bei einem weiteren vorteilhaften Ausführungsbeispiel ist es zweckmäßig, wenn das Einstellelement eine Kolben-Zylindereinheit mit einem Kolben und einem Zylinder aufweist. Die Kolben-Zylindereinheit ist vorteilhaft mittels eines Druckmittels beaufschlagbar, so dass durch die Beaufschlagung eines Druckmittels, wie beispielsweise mit Hydrauliköl, Luft etc. die Einstellung der Kolben-Zylindereinheit relativ zu einander vornehmbar ist und eine Längenänderung vornehmbar ist.

Bei einem anderen vorteilhaften Ausführungsbeispiel ist es zweckmäßig, wenn das Einstellelement eine exzentrisch einstellbare Anlenkung an der Exzenterwelle aufweist.

Dabei ist es vorteilhaft, wenn die exzentrisch einstellbare Anlenkung an der Exzenterwelle einen einstellbaren Ring oder Bereich aufweist, welcher eine verdrehbar veränderliche Anlenkung des Verbindungselements an der Exzenterwelle aufweist. Durch die Verdrehung der Anlenkung kann der Drehpunkt des Verbindungselements im Bereich der Exzenterwelle eingestellt werden, so dass dieser näher oder weiter von der Drehachse der Exzenterwelle einstellbar ist.

Bezüglich der Aufgabe zu dem Verfahren wird die Aufgabe gelöst mit einem Verfahren zur Steuerung einer Schneidvorrichtung mit einem ersten Schneidblatt eines Obermessers und einem zweiten Schneidblatt eines Untermessers, mit einer Antriebsvorrichtung mit zumindest zwei drehbar antreibbaren Exzenterwellen, welche mittels Verbindungselementen zumindest mit dem ersten Schneidblatt verbindbar sind, wobei zumindest eines der Verbindungselemente in der Länge veränderlich einstellbar ist.

Dabei ist es zweckmäßig, wenn die beiden Verbindungselemente in ihrer Länge unabhängig voneinander und unterschiedlich verstellbar sind.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine schematische Darstellung einer erfindungsgemäßen Schneid- vorrichtung,
- Fig. 2: eine schematische Darstellung einer erfindungsgemäßen Schneid- vorrichtung,
- Fig. 3: eine schematische Darstellung einer erfindungsgemäßen Schneid- vorrichtung,
- Fig. 4: eine schematische Darstellung einer erfindungsgemäßen Schneid- vorrichtung,
- Fig. 5: eine schematische Darstellung einer erfindungsgemäßen Schneid- vorrichtung, und
- Fig. 6: eine schematische Darstellung einer erfindungsgemäßen Schneid- vorrichtung.

### Bevorzugte Ausführung der Erfindung

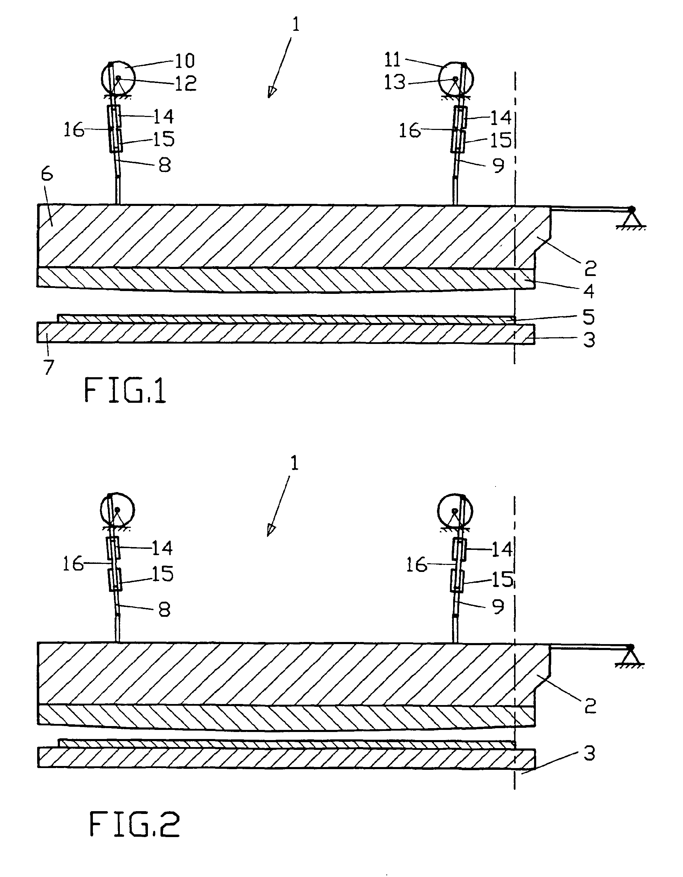

Die Figur 1 zeigt eine schematische Darstellung einer erfindungsgemäßen Schneidvorrichtung 1. Die Schneidvorrichtung 1 weist dabei ein erstes Schneidblatt 2 und ein zweites Schneidblatt 3 auf, wobei die beiden Schneidblätter 2,3 jeweils ein Schneidmesser 4,5 aufweisen, die mit einem Träger 6,7 des Schneidblatts 2,3 verbunden sind. Das erste Schneidblatt 2 bildet einen Teil eines Obermessers und das zweite Schneidblatt 3 bildet einen Teil eines Untermessers. Zur Durchführung des Schneidvorgangs ist das Schneidblatt 2 über Verbindungselemente 8,9 mit jeweils einer Exzenterwelle 10, 11 verbunden, so dass durch Drehung der Exzenterwellen 10,11 gemäß den dargestellten Pfeilen eine Bewegung des Schneidblatts 2 verursacht wird. Die Bewegung des ersten Schneidblatts 2 erfolgt als überlagerte Bewegung einer linearen Bewegung und einer Drehbewegung. Das zweite Schneidblatt 3 ist vorzugsweise unbeweglich fixiert, es kann bei einem anderen Ausführungsbeispiel aber auch beweglich und über Exzenterwellen beweglich betätigbar ausgestaltet sein.

Die Exzenterwellen 10,11 sind jeweils um ihre Achsen 12,13 drehbar gelagert und die Verbindungselemente 8,9 sind außermittig bezüglich der Drehachsen 12,13 der Exzenterwellen gelenkig angebunden, so dass durch die Drehung der Exzenterwellen 10,11 die Verbindungselemente 8,9 verlagert werden und aufgrund ihrer gelenkigen Anbindungen an den Exzenterwellen 10,11 und an dem ersten Schneidblatt 2 das Schneidblatt 2 entsprechend bewegt wird. Zur Ansteuerung und Drehung der Exzenterwellen ist eine nicht dargestellte Antriebsvorrichtung vorgesehen.

Die Verbindungselemente 8,9, auch als Pleuel ausgebildet, weisen erfindungsgemäße Einstellelemente 14,15,16 auf, durch die die Verbindungselemente 8,9 in ihrer Länge variiert und eingestellt werden können. Durch die einstellbare Variation der Länge der Verbindungselemente 8,9 kann das Messer bzw. das Schneidblatt 2 des Obermesserschlittens im Überschnitt und in der Schnittbewegung variiert werden. Durch diese Einstellbarkeit und Variabilität des Überschnitts kann eine Verbesserung der Schnittkanten erzielt werden. Beim Schneiden von Blechen größerer Blechdicke kann eine geringere Blechverformung an den Schnittkanten erzielt werden. Auch kann eine Vermeidung von Scherbögen und ein Abbiegen des Blechendes bei größeren Blechdicken erzielt werden.

Durch die Einstellung der Länge der Verbindungselemente 10, 11 kann die Höhe des ersten Schneidblatts, wie des Obermessers, erreichet werden und somit kann die Verbesserung der Eintauchtiefe des Messers erreicht werden. Durch ein ungleichmäßiges Verstellen der Länge der Verbindungselemente 8,9 relativ zu einander kann die Bewegung des ersten Schneidblatts variiert werden, so dass der Schnittverlauf und der Schnittwinkel veränderbar ist. Dadurch kann eine Anpassung an verschiedene Blechdicken und Materialgüten vorgenommen werden und es können vorzugsweise auch Blecke mit größeren Blechdicken mit einem Rollschnitt geschnitten werden,

Im Ausführungsbeispiel der Figuren 1 und 2 sind die Einstellelemente durch eine Gewindestange bzw. Gewindespindel 16 und mit der Gewindestange 16 verbundene Gewindehülsen 14,15 ausgebildet. Durch die Verdrehung der Gewindestange 16 bzw. Gewindespindel relativ zu den Gewindehülsen 14,15 kann eine Verlängerung oder Verkürzung der Verbindungselemente 8,9 erreicht werden.

Die Figur 1 zeigt eine Einstellung der Einstellelemente 14,15,16, bei welcher der Abstand zwischen dem ersten Schneidblatt 2 und dem zweiten Schneidblatt 3 relativ groß ist. Die Gewindestange 16 bzw. Gewindespindel ist relativ zu den Gewindehülsen 14,15 eingefahren, so dass eine Verkürzung der Verbindungselemente 8,9 erreicht ist.

Die Figur 2 zeigt eine Einstellung der Einstellelemente 14,15,16, bei welcher der Abstand zwischen dem ersten Schneidblatt 2 und dem zweiten Schneidblatt 3 relativ klein ist im Vergleich zur Einstellung der Figur 1. Die Gewindestange 16 bzw. Gewindespindel ist relativ zu den Gewindehülsen 14,15 ausgefahren, so dass eine Verlängerung der Verbindungselemente 8,9 erreicht ist.

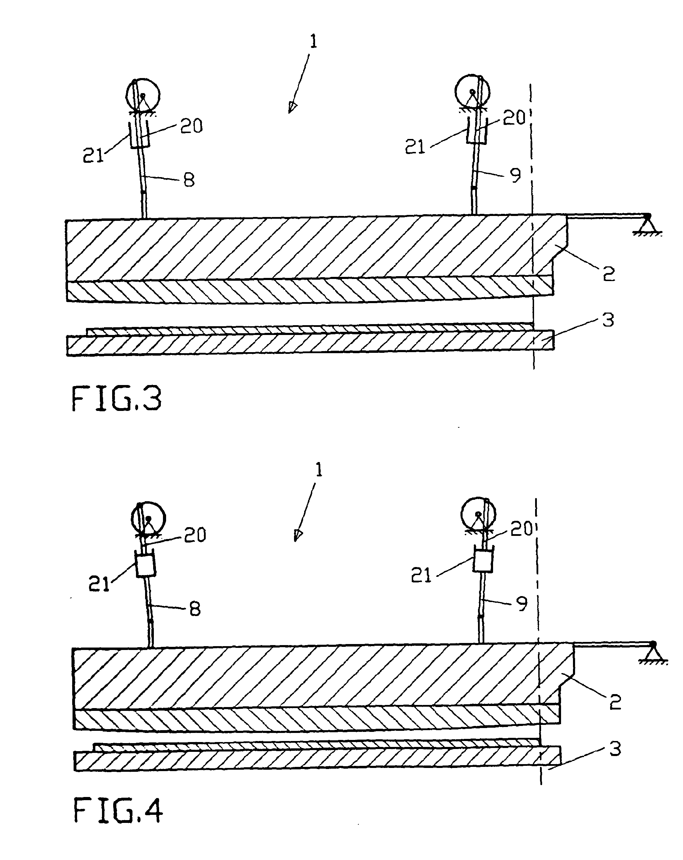

Die Figuren 3 und 4 zeigen Schneidvorrichtungen 1, die sich im Vergleich zu den Schneidvorrichtungen der Figuren 1 und 2 dadurch unterscheiden, dass die Einstellelemente 20,21, durch welche die Verbindungselemente 8,9 in ihrer Länge variiert werden können als Druckmittelkolben-Zylindereinheit ausgebildet sind.

Die Figur 3 zeigt eine Einstellung der Einstellelemente 20,21, bei welcher der Abstand zwischen dem ersten Schneidblatt 2 und dem zweiten Schneidblatt 3 relativ groß ist. Dazu ist der Kolben 20 der Kolben-Zylindereinheit relativ weit in den Zylinder 21 eingefahren.

Die Figur 4 zeigt eine Einstellung der Einstellelemente 20,21, bei welcher der Abstand zwischen dem ersten Schneidblatt 2 und dem zweiten Schneidblatt 3 relativ klein ist im Vergleich zur Einstellung der Figur 3. Dazu ist der Kolben 20 der Kolben-Zylindereinheit relativ weit aus dem Zylinder 21 ausgefahren.

Durch eine Wegmessung bzw. Wegsteuerung der Einstellung der Kolben-Zylindereinheit 20,21 kann eine beliebige Stellung zwischen der vollständig eingefahrenen und der vollständig ausgefahrenen Stellung erzielt werden. Durch eine asymmetrische Einstellung der beiden Kolben-Zylindereinheiten 20,21 kann eine Veränderung des Schnittverlaufs und der Schnittgeometrie erreicht werden.

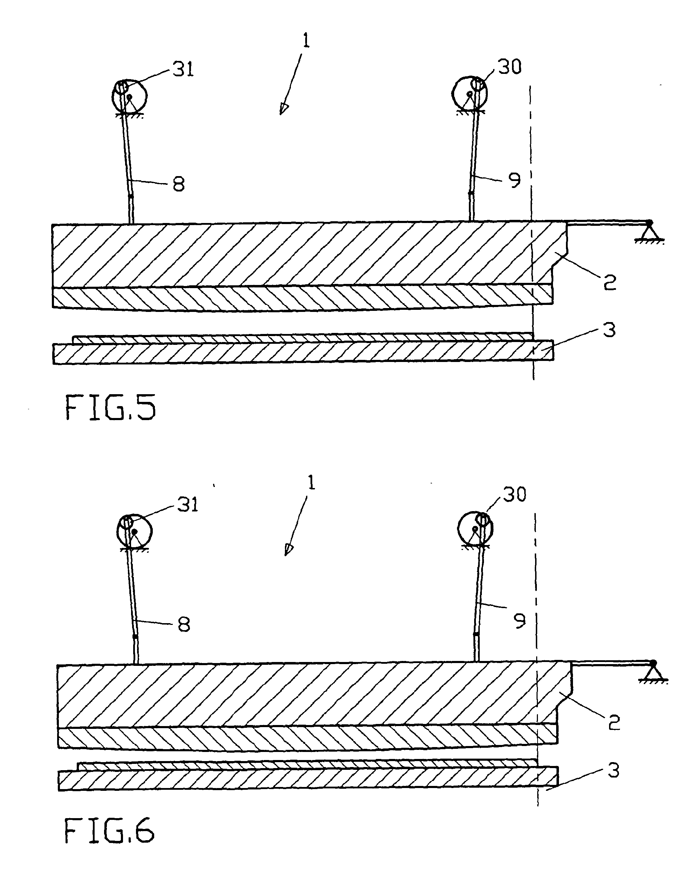

Die Figuren 5 und 6 zeigen Schneidvorrichtungen 1, die sich im Vergleich zu den Schneidvorrichtungen der Figuren 1, 2, 3 und 4 dadurch unterscheiden, dass die Einstellelemente 30,31, durch welche die Verbindungselemente 10,11 in ihrer Länge variiert werden können, als exzentrische Ringe oder Bereiche ausgebildet sind, die die Anlenkung der Verbindungselemente 8,9 mit der Exzenterwelle variabel gestaltet, in dem der Ring oder der Bereich in der Exzenterwelle 10,11 verdrehbar und einstellbar gelagert ist.

Die Figur 5 zeigt eine Einstellung der Einstellelemente 30,31, bei welcher der Abstand zwischen dem ersten Schneidblatt 2 und dem zweiten Schneidblatt 3 relativ groß ist. Dazu ist der Ring derart gedreht, dass die Anlenkung oben ist.

Die Figur 6 zeigt eine Einstellung der Einstellelemente 30,31, bei welcher der Abstand zwischen dem ersten Schneidblatt 2 und dem zweiten Schneidblatt 3 relativ klein ist im Vergleich zur Einstellung der Figur 5. Dazu ist der Ring oder Bereich derart gedreht, dass die Anlenkung unten ist.

Durch diese Ausgestaltung eines exzentrischen Rings oder Bereichs, der in die Exzenterwelle, oder auch Kurbelwelle, eingebracht ist, kann eine Veränderung des Abstands der Anlenkung des Verbindungselements 8,9 und der Drehachse 12,13 der Exzenterwelle 10,11 erzielt werden.

### Bezugszeichenliste

- 1: Schneidvorrichtung
- 2: Schneidblatt
- 3: Schneidblatt
- 4: Schneidmesser
- 5: Schneidmesser
- 6: Träger
- 7: Träger
- 8: Verbindungselement
- 9: Verbindungselement
- 10: Exzenterwelle
- 11: Exzenterwelle
- 12: Achse
- 13: Achse
- 14: Einstellelement
- 15: Einstellelement
- 16: Einstellelement
- 20: Einstellelement
- 21: Einstellelement
- 30: Einstellelement
- 31: Einstellelement

## Patentansprüche

1. Schneidvorrichtung (1) mit einem ersten Schneidblatt (2) eines Obermessers und einem zweiten Schneidblatt (3) eines Untermessers, mit einer Antriebsvorrichtung welche mittels Verbindungselementen (8, 9) zumindest mit dem ersten Schneidblatt verbunden ist, wobei die Verbindungselemente (8, 9) jeweils ein Einstellelement (14, 15, 16, 20, 21, 30, 31) aufweisen zur Längenverstellung des Verbindungselement, **dadurch gekennzeichnet, dass** die Antriebsvorrichtung mit zumindest zwei drehbar antreibbaren Exzenterwellen (10, 11) verbunden ist, wobei beide Verbindungselemente zwischen den Exzenterwellen und dem ersten Schneidblatt in der Länge veränderlich einstellbar sind,
und wobei das Einstellelement eine Kolben-Zylindereinheit (20, 21) mit einem Kolben (20) und einem Zylinder (21) aufweist.

2. Verfahren zur Steuerung einer Schneidvorrichtung (1) mit einem ersten Schneidblatt (2) eines Obermessers und einem zweiten Schneidblatt (3) eines Untermessers, mit einer Antriebsvorrichtung welche mittels Verbindungselementen (8, 9) zumindest mit dem ersten Schneidblatt verbunden ist, wobei die Verbindungselemente (8, 9) jeweils ein Einstellelement (14, 15, 16, 20, 21, 30 31) aufweisen zur Längenverstellung des Verbindungselements, **dadurch gekennzeichnet, dass** die Antriebsvorrichtung mit zumindest zwei drehbar antreibbaren Exzenterwellen (10, 11) verbunden ist, wobei beide Verbindungselemente zwischen den Exzenterwellen und dem ersten Schneidblatt in der Länge veränderlich einstellbar sind, und wobei das Einstellelement eine Kolben-Zylindereinheit (20, 21) mit einem Kolben (20) und einem Zylinder (21) aufweist.

## Claims

1. Cutting device (1) with a first cutting blade (2) of an upper cutter and a second cutting blade (3) of a lower cutter and with a drive device that is connected at least with the first cutting blade by means of connecting elements (8, 9), wherein each connecting element (8, 9) comprises a respective adjusting element (14, 15, 16, 20, 21, 30, 31) for length adjustment of the connecting element, **characterised in that** the drive device is connected with at least two rotatably drivable eccentric shafts (10, 11), wherein the two connecting elements between the eccentric shafts and the first cutting blade are variably adjustable in length and wherein the adjusting element comprises a piston-cylinder unit (20, 21) with a piston (20) and a cylinder (21).

2. Method of controlling a cutting device (1) with a first cutting blade (2) of an upper cutter and a second cutting blade (3) of a lower cutter and with a drive device that is connected at least with the first cutting blade by means of connecting elements (8, 9), wherein each connecting element (8, 9) comprises a respective adjusting element (14, 15, 16, 20, 21, 30, 31) for length adjustment of the connecting element, **characterised in that** the drive device is connected with at least two rotatably drivable eccentric shafts (10, 11), wherein the two connecting elements between the eccentric shafts and the first cutting blade are variably adjustable in length and wherein the adjusting element comprises a piston-cylinder unit (20, 21) with a piston (20) and a cylinder (21).

## Revendications

1. Dispositif de coupe (1) comprenant une première lame de coupe (2) d'un couteau supérieur et une seconde lame de coupe (3) d'un couteau inférieur, comprenant un dispositif d'entraînement qui est relié au moins à la première lame de coupe au moyen d'éléments de liaison (8, 9), dans lequel les éléments de liaison (8, 9) comprennent respectivement un élément de réglage (14, 15, 16, 20, 21, 30, 31) pour le réglage en longueur de l'élément de liaison,
**caractérisé en ce que** le dispositif d'entraînement est relié à au moins deux arbres excentriques (10, 11) capables d'être entraînés en rotation, dans lequel les deux éléments de liaison sont réglables de façon variable en longueur entre les arbres excentriques et la première lame de coupe, et dans lequel l'élément de réglage comprend une unité à piston-et-cylindre (20, 21) avec un piston (20) et un cylindre (21).

2. Procédé pour la commande d'un dispositif de coupe (1) comprenant une première lame de coupe (2) d'un couteau supérieur et une seconde lame de coupe (3) d'un couteau inférieur, et comprenant un dispositif d'entraînement qui est relié au moins à la première lame de coupe au moyen d'éléments de liaison (8, 9), dans lequel les éléments de liaison (8, 9) comprennent respectivement un élément de réglage (14, 15, 16, 20, 21, 30, 31) pour le réglage en longueur de l'élément de liaison, **caractérisé en ce que** le dispositif d'entraînement est relié à au moins deux arbres excentriques (10, 11) capables d'être entraînés en rotation, dans lequel les deux éléments de liaison sont réglables de façon variable en longueur entre les arbres excentriques et la première lame de coupe, et dans lequel l'élément de réglage comprend une unité à piston-et-cylindre (20, 21) avec un piston (20) et un cylindre (21).
